# EUROPEAN PATENT APPLICATION

(11) **EP 1 503 578 A1**
(43) Date of publication of application: **02.02.2005**
(21) Application number: 03723101.6
(22) Date of filing: 11.04.2003
(51) Int. Cl.: H04N 5/14, H04N 5/217, G06T 7/20

(54) **MOTION DETECTOR, IMAGE PROCESSING SYSTEM, MOTION DETECTING METHOD, PROGRAM, AND RECORDING MEDIUM**

(30) Priority: 17.04.2002 JP 2002114561
(71) Applicant: MATSUSHITA ELECTRIC INDUSTRIAL CO., LTD., Kadoma-shi, Osaka 571-8501 (JP)
(72) Inventor: TAGAMI, Tomohisa, Habikino-shi, Osaka 583-0882 (JP); SEKI, Yoshio, Osaka-shi, Osaka 558-0055 (JP)
(74) Representative: Grünecker, Kinkeldey, Stockmair & Schwanhäusser Anwaltssozietät
(86) International application number: PCT/JP2003/004580
(87) International publication number: WO 2003/088648

(57) **Abstract**

Accurate detection of stationary image regions and motion image regions has been difficult in the areas where the image varies gradually.

Provided is a motion detecting apparatus comprising: small-amplitude area detecting means 9 of detecting the amplitude amount of the image of a predetermined pixel vicinity area of an image containing a predetermined pixel; motion information extracting means 10 of detecting the time-dependent change amount of the image; comparing means 2 of determining whether at least the predetermined pixel is a motion pixel or not on the basis of the detected change amount; and motion pixel counting means 3 and motion signal generating means 11 of generating a motion signal corresponding to predetermined pixel, on the basis of the result of determination; wherein when detected amplitude amount is smaller, at least the gain for the change amount corresponding to predetermined pixel is corrected into a greater value, so that the time-dependent change amount of image is detected.

## Description

### TECHNICAL FIELD

The present invention relates to a motion detecting apparatus, an image processing system, a motion detecting method, a program, and a recording medium used for the noise reduction and the format conversion of video signals.

### BACKGROUND ART

The configuration of a prior art motion detecting apparatus (see, for example, Japanese Laid-Open Patent Publication No. Hei 6-311504) is described below with reference to Figure 10 showing a block diagram of a prior art motion detecting apparatus.

Here, the entire disclosure of Japanese Laid-Open Patent Publication No. Hei 6-311504 is incorporated herein by reference in its entirety.

Numeral 101 indicates a terminal of inputting a video signal.

Numeral 102 indicates a frame memory of delaying the inputted video signal by one frame.

The operation of this prior art motion detecting apparatus is described below.

A subtractor 103 subtracts the output of the frame memory 102 from the input signal, and thereby outputs the frame difference.

An absolute value circuit 104 calculates the absolute value of the frame difference output, and then provides the result to a ROM 105.

The ROM 105 compares the frame difference output having been provided after the absolute value calculation, with a predetermined threshold value, so as to output "1" when the output of the absolute value circuit 104 is greater, and output "0" when the output of the absolute value circuit is equal or smaller.

This output is transmitted to a memory section 106, and then the data of a pixel vicinity area of a pixel of interest is outputted with a signal delay.

A determining circuit 107 determines the motion on the basis of the data of the pixel vicinity area, and thereby outputs the determination result.

Nevertheless, in such a prior art motion detecting apparatus, in the portions where the input video signal has only a small change and where the image varies gradually, the output of the subtractor 103 is small even when the image moves.

In such a case, the output of the subtractor 103 can be under the threshold value. This causes the motion image region to be determined incorrectly as a stationary image region, and hence causes a miss in the motion detection.

### DISCLOSURE OF INVENTION

The invention has been devised with considering such a problem in the prior art. An object of the invention is to provide a motion detecting apparatus, an image processing system, a motion detecting method, a program, and a recording medium that permit more accurate detection of motion image regions and stationary image regions even in the areas where the image varies gradually.

A first invention of the present invention is a motion detecting apparatus comprising:
amplitude amount detecting means of detecting the amplitude amount of an image corresponding to a predetermined pixel vicinity area of said image containing a predetermined pixel;
change amount detecting means of detecting the time-dependent change amount of said image;
motion pixel determining means of determining whether at least said predetermined pixel is a motion pixel or not on the basis of said detected change amount; and
motion signal generating means of generating a motion signal corresponding to said predetermined pixel, on the basis of the result of said determination; wherein
on the basis of said detected amplitude amount, (1) the time-dependent change amount of said image is detected, and/or (2) whether at least said predetermined pixel is a motion pixel or not is determined, and/or (3) the motion signal corresponding to said predetermined pixel is generated.

A second invention of the present invention is a motion detecting apparatus according to the first invention of the present invention, wherein when said detected amplitude amount is smaller, at least the gain for the change amount corresponding to said predetermined pixel is corrected into a greater value, so that the time-dependent change amount of said image is detected.

A third invention of the present invention is a motion detecting apparatus according to the first invention of the present invention, wherein when said detected amplitude amount is smaller, the threshold level used in the determination of whether at least said predetermined pixel is a motion pixel or not is corrected into a smaller value, so that whether at least said predetermined pixel is a motion pixel or not is determined.

A fourth invention of the present invention is a motion detecting apparatus according to the first invention of the present invention, wherein when said detected amplitude amount is smaller, the area of pixels where the result of said determination is used for the generation of the motion signal corresponding to said predetermined pixel is corrected greater, so that the motion signal corresponding to said predetermined pixel is generated.

A fifth invention of the present invention is a motion detecting apparatus according to the first invention of the present invention, wherein when said detected amplitude amount is smaller, the gain for the motion signal corresponding to said predetermined picture is corrected into a greater value, so that the motion signal corresponding to said predetermined pixel is generated.

A sixth invention of the present invention is an image processing system comprising:
a motion detecting apparatus according to the first invention of the present invention; and
an image processing apparatus of performing predetermined image processing on the basis of said generated motion signal.

A seventh invention of the present invention is a motion detecting method comprising:
an amplitude amount detecting step of detecting the amplitude amount of an image corresponding to a predetermined pixel vicinity area of said image containing a predetermined pixel;
a change amount detecting step of detecting the time-dependent change amount of said image;
a motion pixel determining step of determining whether at least said predetermined pixel is a motion pixel or not on the basis of said detected change amount; and
a motion signal generating step of generating a motion signal corresponding to said predetermined pixel, on the basis of the result of said determination; wherein
on the basis of said detected amplitude amount, (1) the time-dependent change amount of said image is detected, and/or (2) whether at least said predetermined pixel is a motion pixel or not is determined, and/or (3) the motion signal corresponding to said predetermined pixel is generated.

An eighth invention of the present invention is a program causing a computer to execute: the amplitude amount detecting step of detecting the amplitude amount of an image corresponding to a predetermined pixel vicinity area of said image containing a predetermined pixel; the change amount detecting step of detecting the time-dependent change amount of said image; the motion pixel determining step of determining whether at least said predetermined pixel is a motion pixel or not on the basis of said detected change amount; and the motion signal generating step of generating a motion signal corresponding to said predetermined pixel, on the basis of the result of said determination; in the motion detecting method according to the seventh invention of the present invention.

A ninth invention of the present invention is a computer-processable recording medium carrying the program according to the eighth invention of the present invention.

A tenth aspect of the invention is a motion detecting apparatus comprising:
change amount detecting means of detecting the time-dependent change amount of an image;
change amount adding means of performing the addition of the change amount corresponding to pixels contained in a predetermined pixel vicinity area of said image containing a predetermined pixel, with respect to the pixels contained in said predetermined pixel vicinity area, on the basis of said detected change amount; and
motion pixel determiningmeans of determining whether at least said predetermined pixel is a motion pixel or not on the basis of the result of said addition.

An eleventh aspect of the invention is an image processing system comprising:
a motion detecting apparatus according to the tenth aspect of the invention; and
an image processing apparatus of performing predetermined image processing on the basis of said generated motion signal.

A twelfth aspect of the invention is a motion detecting method comprising:
a change amount detecting step of detecting the time-dependent change amount of an image;
a change amount adding step of performing the addition of the change amount corresponding to pixels contained in a predeterminedpixel vicinity area of said image containing a predetermined pixel, with respect to the pixels contained in said predetermined pixel vicinity area, on the basis of said detected change amount; and
a motion pixel determining step of determining whether at least said predetermined pixel is a motion pixel or not on the basis of the result of said addition.

A thirteenth aspect of the invention is a program causing a computer to execute: the change amount detecting step of detecting the time-dependent change amount of an image; the change amount adding step of performing the addition of the change amount corresponding to pixels contained in a predetermined pixel vicinity area of said image containing a predetermined pixel, with respect to the pixels contained in said predetermined pixel vicinity area, on the basis of said detected change amount; and the motion pixel determining step of determining whether at least said predetermined pixel is a motion pixel or not on the basis of the result of said addition; in the motion detecting method according to the twelfth aspect of the invention.

A fourteenth aspect of the invention is a computer-processable recording medium carrying the program according to the thirteenth aspect of the invention.

### BRIEF DESCRIPTION OF DRAWINGS

Figure 1 is a block diagram of a motion detecting apparatus according to Embodiment 1 of the invention.
Figure 2 is a detailed circuit diagram of motion information extracting means 1 according to Embodiment 1 of the invention.
Figure 3 is an explanation diagram explaining the operation of motion signal generating means 5 according to Embodiment 1 of the invention.
Figure 4 is a block diagram of a motion detecting apparatus according to Embodiment 2 of the invention.
Figure 5 is a block diagram of a motion detecting apparatus according to Embodiment 3 of the invention.
Figure 6 is a detailed block diagram of small-amplitude area detecting means 9 according to Embodiment 3 of the invention.
Figure 7 is a block diagram of a motion detecting apparatus according to Embodiment 4 of the invention.
Figure 8 is a block diagram of a motion detecting apparatus according to Embodiment 5 of the invention.
Figure 9 is a block diagram of a noise reducing apparatus according to Embodiment 6 of the invention.

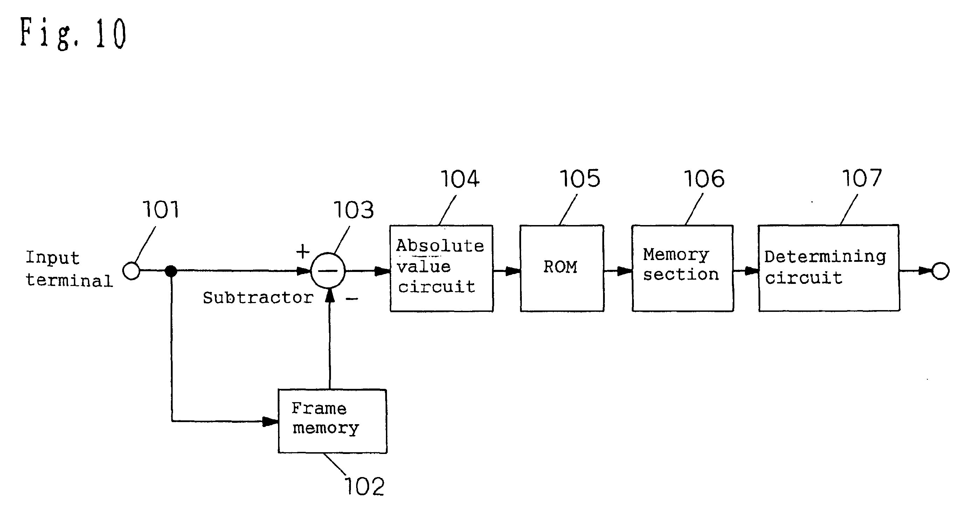

Figure 10 is a block diagram of a prior art motion detecting apparatus.

### [Description of the Reference Numerals]

- 1, 10: Motion information extracting means
- 2: Comparator
- 3, 12: Motion pixel counting means
- 4: Motion amount adding means
- 5, 11, 13: Motion signal generating means
- 6: Frame memory
- 7: Subtractor
- 8: Absolute value circuit
- 9: Small-amplitude area detecting means
- 101: Input terminal
- 102: Frame memory
- 103: Subtractor
- 104: Absolute value circuit
- 105: ROM
- 106: Memory section
- 107: Determining circuit

### BEST MODE FOR CARRYING OUT THE INVENTION

Embodiments of the invention are described below with reference to the drawings.

### [Embodiment 1]

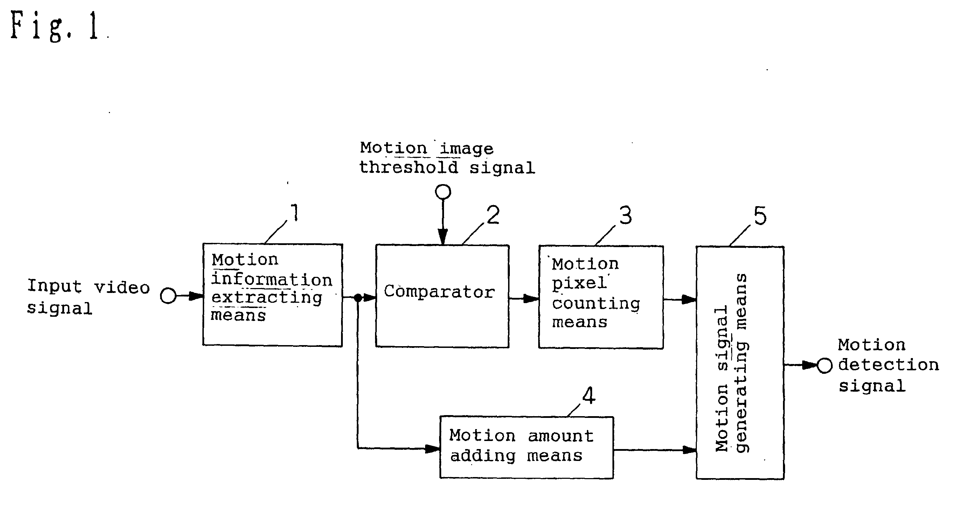

The configuration of a motion detecting apparatus according to the present embodiment is described below with reference mainly to Figure 1 showing a block diagram of a motion detecting apparatus according to Embodiment 1 of the invention.

Numeral 1 indicates motion information extracting means of extracting motion information from an input video signal.

Numeral 2 indicates comparing means of comparing the output of the motion information extracting means 1 with a predetermined motion image threshold signal and thereby detecting a motion pixel. The comparing means 2 comprises a comparator.

Numeral 3 indicates motion pixel counting means of counting the number of motion pixels in a predetermined pixel vicinity area containing a pixel of interest on the basis of the output of the comparing means 2. The motion pixel counting means 3 comprises: a memory of acquiring data within the predetermined pixel vicinity area; and an adder of adding the acquired motion pixel information.

Numeral 4 indicates motion amount adding means of adding the motion amount within the predetermined pixel vicinity area containing the pixel of interest on the basis of the output of the motion information extracting means 1. The motion amount adding means 4 comprises: a memory of acquiring the motion amount data within the predetermined pixel vicinity area; and an adder of adding up the motion amounts of the pixels.

Numeral 5 indicates motion signal generating means of generating a motion signal on the basis of the output signal from the motion pixel counting means 3 and the output signal from the motion amount adding means 4.

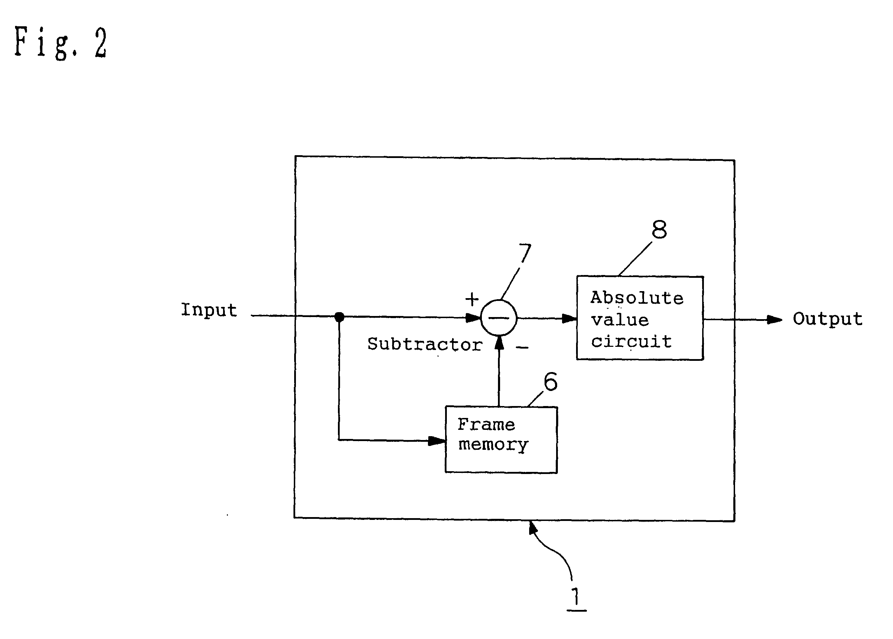

The configuration of the motion information extracting means 1 is described below in further detail with reference to Figure 2 showing a detailed circuit diagram of the motion information extracting means 1 according to Embodiment 1 of the invention.

Numeral 6 indicates a frame memory of delaying the input signal by one frame.

Numeral 7 indicates a subtractor of calculating the difference of the input signal from the one-frame delayed signal currently obtained from the frame memory 6.

Numeral 8 indicates an absolute value circuit of calculating the absolute value of the output of the subtractor 7.

Here, the change amount detecting means according to the invention corresponds to means including the motion information extracting means 1. The change amount adding means according to the invention corresponds to means including the motion amount adding means 4. The motion pixel determining means according to the invention corresponds to means including the motion signal generating means 5.

The operation of a video recording system according to the present embodiment is described below.

Further, with describing the operation of the video recording system according to the present embodiment, an embodiment of a motion detecting method according to the invention is described at the same time (this situation is the same also in the other embodiments).

The motion information extracting means 1 calculates the one-frame difference signal of the input video signal, and then calculates the absolute value of the one-frame difference signal so as to obtain motion information.

The motion information is transmitted from the motion information extracting means 1 to the comparing means 2, and thereby compared with a predetermined motion image threshold signal.

The comparing means 2 outputs "1" when the motion information is greater than the motion image threshold signal, and outputs "0" when the former is equal to or smaller than the latter.

The comparison result from the comparing means 2 is transmitted to the motion pixel counting means 3, so that the number of motion pixels within a predetermined pixel vicinity area containing a pixel of interest is counted.

The motion information from the motion information extracting means 1 is transmitted also to the motion amount adding means 4, so that the motion amount within the predetermined pixel vicinity area containing the pixel of interest is added.

Themotion signal generatingmeans 5 generates amotion signal with taking into account not only the number of motion pixels within the predetermined pixel vicinity area obtained from the motion pixel counting means 3 but also the total motion amount within the predetermined pixel vicinity area obtained from the motion amount adding means 4.

More specifically, when the total motion amountwithin the predetermined pixel vicinity area is greater than a predetermined threshold level (even when the number of motion pixels within the predetermined pixel vicinity area is smaller than a predetermined threshold level) , the motion signal generated for the pixel of interest is non-zero. This avoids a miss in the motion detection.

As such, in the present embodiment, it is essential to determine the motion level with taking into account not only the number of motion pixels within the predetermined pixel vicinity area but also the total motion amount within the predetermined pixel vicinity area.

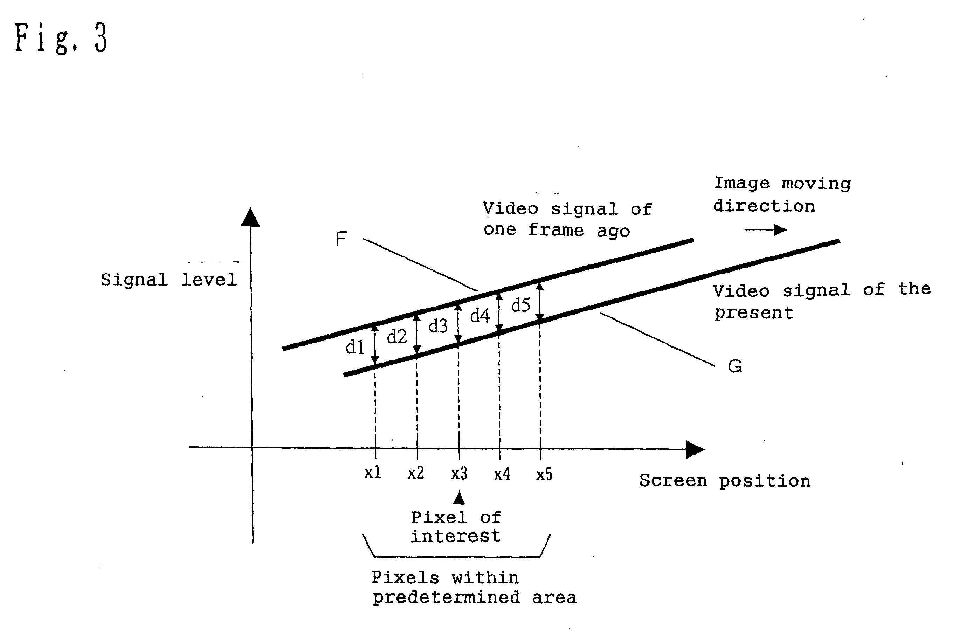

The total motion amount within the predetermined pixel vicinity area according to the present embodiment is described below in further detail with reference to Figure 3 showing a diagram illustrating the operation of the motion signal generating means 5 according to Embodiment 1 of the invention.

In Figure 3, the vertical axis indicates the signal level, while the horizontal axis indicates the screen position. Symbol F indicates an input video signal of one frame ago, while symbol G indicates an input video signal of the present.

As shown in Figure 3, an image that gradually varies moves from F to G, so that the signal level changes.

At that time, the absolute value of the one-frame difference signal in each of the pixels x1, x2, x3, x4, and x5 within the predetermined pixel vicinity area is d1, d2, d3, d4, or d5, respectively.

When each of these values d1-d5 is smaller than the motion image threshold signal, each of the pixels x1-x5 is not detected as a motion pixel.

In the present embodiment, the motion amount adding means 4 adds up all the motion amounts d1, d2, d3, d4, and d5 within the predetermined pixel vicinity area.

Even when these d1, d2, d3, d4, and d5 are small, the sum of d1, d2, d3, d4, and d5 becomes rather large.

Accordingly, even when the number of motion pixels notified from the motion pixel counting means 3 is "0", the motion signal generating means 5 can detect the motion when the total motion amount (=d1+d2+d3+d4+d5) notified from the motion amount adding means 4 is greater than a predetermined threshold value.

As such, the total motion amount within the predetermined pixel vicinity area is taken into account in the criteria used in the motion signal generating means 5.

This permits the output of the motion amount adding means 4 to express appropriate motion information even in an area where the image varies gradually (that is, a small-amplitude area) , and hence avoids a miss in the motion detection.

This reduces the chance of a miss in the motion detection in the motion signal generating means , and permits accurate discrimination between motion and noise, so as to permit accurate discrimination between the motion image portion and the stationary image portion.

The number of pixels within the predetermined pixel vicinity area may obviously be changed depending on the condition of the input video signal.

For example, in a screen image having a very small motion, the number of pixels of the predetermined pixel vicinity area in the vicinity of the pixel of interest may be increased so that the accuracy of detection may be improved. In contrast, in a screen image having a large motion, the number of pixels of the predetermined pixel vicinity area may be reduced so that the detection speed may be improved.

### [Embodiment 2]

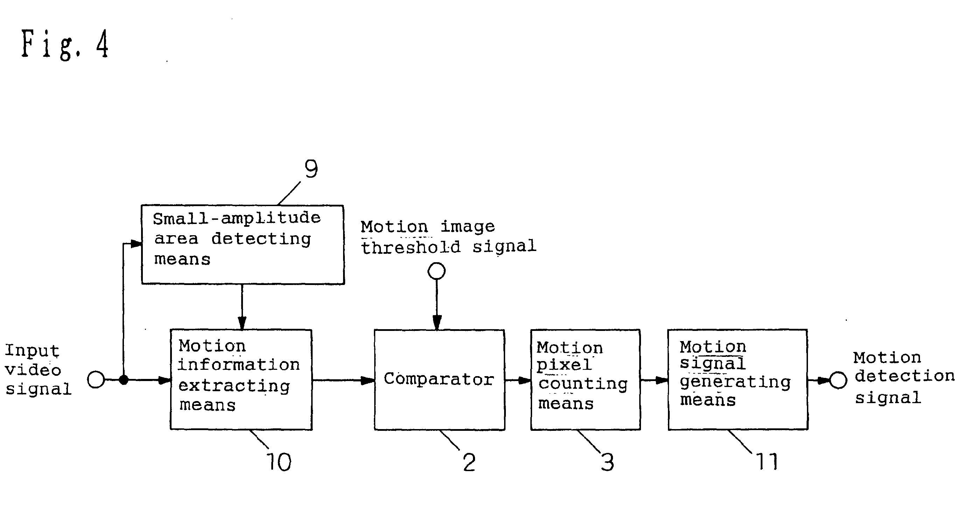

The configuration of a motion detecting apparatus according to the present embodiment is described below with reference mainly to Figure 4 showing a block diagram of a motion detecting apparatus according to Embodiment 2 of the invention.

The configuration of the motion detecting apparatus according to the present embodiment is similar to that of the above-mentioned motion detecting apparatus according to Embodiment 1.

Nevertheless, the configuration of the motion detecting apparatus according to the present embodiment is different from that of the above-mentioned motion detecting apparatus according to Embodiment 1 in the points that (1) a small-amplitude area detecting means 9 detects a small-amplitude area in the input video signal, and then provides a detection signal to a motion information extracting means 10, and that (2) a motion signal generating means 11 detects the motion on the basis only on the number of motion pixels within the predetermined pixel vicinity area provided from the motion pixel counting means 3.

The small-amplitude area detecting means 9 comprises a within predetermined pixel vicinity area maximum value detecting circuit, a within predetermined pixel vicinity area minimum value detecting circuit, and a subtractor of calculating the difference between these values.

Here, the amplitude amount detecting means according to the invention corresponds to means including the small-amplitude area detecting means 9. The change amount detecting means according to the invention corresponds to means including the motion information extracting means 10. The motion pixel determining means according to the invention corresponds to means including the comparing means 2. The motion signal generating means according to the invention corresponds to means including the motion pixel counting means 3 and the motion signal generating means 11.

The operation of the motion detecting apparatus according to the present embodiment is described below.

The small-amplitude area detecting means 9 receives an input video signal, and thereby detects an area where the image varies gradually (that is, a small-amplitude area).

The operation described above permits the detection of the maximum amplitude amount within the predetermined pixel vicinity area. Thus, when this maximum amplitude amount is small, the image is determined as a small-amplitude area where the image varies gradually.

On the basis of the detection signal from the small-amplitude area detecting means 9, the motion information extracting means 10 performs the control such that a smaller amplitude amount causes a higher sensitivity to the motion.

This control is implemented, for example, by increasing the gain for the frame difference signal in the motion information extracting means 10 when the amplitude amount decreases.

As such, the small-amplitude area detecting means 9 detects a portion where the image varies gradually. Then, the sensitivity of the motion information extracting means 10 is changed on the basis of the detection signal.

This reduces the chance of a miss in the motion detection in the motion signal generating means 5 even in an area where the image varies gradually (that is, a small-amplitude area), and hence permits accurate discrimination between the motion image portion and the stationary image portion.

### [Embodiment 3]

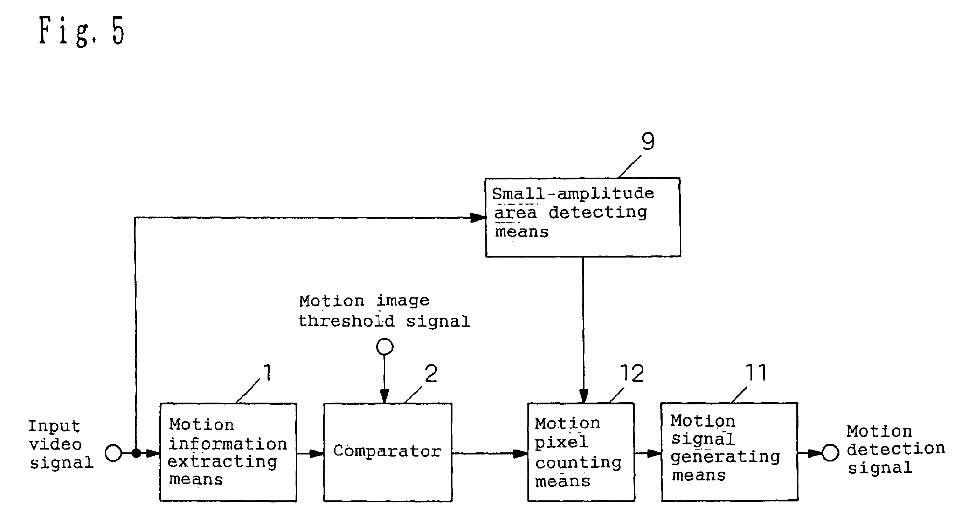

The configuration of a motion detecting apparatus according to the present embodiment is described below with reference mainly to Figure 5 showing a block diagram of a motion detecting apparatus according to Embodiment 3 of the invention.

The configuration of the motion detecting apparatus according to the present embodiment is similar to that of the above-mentioned motion detecting apparatus according to Embodiments 1 and 2.

Nevertheless, the configuration of the motion detecting apparatus according to the present embodiment is different from that of the above-mentioned motion detecting apparatus according to Embodiments 1 and 2 in the point that a detection signal from the small-amplitude area detectingmeans 9 is provided to a motion pixel counting means 12.

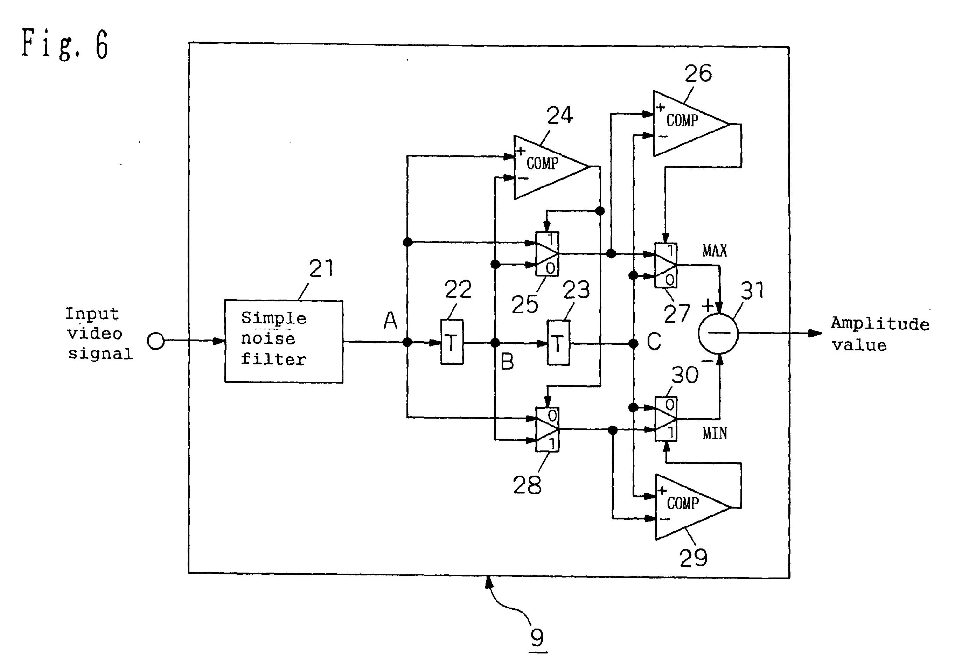

The configuration of the small-amplitude area detectingmeans 9 is describedbelow in detail with reference to Figure 6 showing a detailed block diagram of the small-amplitude area detecting means 9 according to Embodiment 3 of the invention.

Numeral 21 indicates a simple noise filter. The simple noise filter 21 is a filter of preventing the noise from affecting the amplitude detection result.

Numerals 22 and 23 indicate flip-flops of delaying the signal by one clock.

Numerals 24, 26, and 29 indicate comparators of comparing the values of input signals.

Numerals 25, 27, 28, and 30 indicate selectors.

Numeral 31 indicates a subtractor.

Here, the amplitude amount detecting means according to the invention corresponds to means including the small-amplitude area detecting means 9. The change amount detecting means according to the invention corresponds to means including the motion information extracting means 1. The motion pixel determining means according to the invention corresponds to means including the comparing means 2. The motion signal generating means according to the invention corresponds to means including the motion pixel counting means 12 and the motion signal generating means 11.

The operation of the motion detecting apparatus according to the present embodiment is described below.

On the basis of the detection signal from the small-amplitude area detecting means 9, the motion pixel counting means 12 performs the control of increasing the sensitivity to the motion.

This control is implemented, for example, by expanding the predetermined pixel vicinity area when the amplitude amount is smaller.

This expansion of the predetermined pixel vicinity area permits easy detection of a motion pixel. This causes an effect equivalent to that the sensitivity to the motion is increased.

The operation of the small-amplitude area detecting means 9 is described below in detail with reference to Figure 6.

The simple noise filter 21 eliminates the noise in the video signal inputted from the input signal terminal.

In the followingdescription, data A indicates a signal the noise of which has been eliminated by the simple noise filter 21. Data B indicates a signal generated by delaying the data A by one clock through the flip-flop 22. Data C indicates a signal generated by delaying the data B by one clock through the flip-flop 23.

(1) The operation is described below that the greatest one is selected among the data A-C.

The comparator 24 compares the data A with the data B.

On the basis of the comparison result of the comparator 24, the selector 25 selects the greater one from the data A and the data B.

The comparator 26 compares the output of the selector 25 with the data C.

On the basis of the comparison result of the comparator 26, the selector 27 selects the greater one from the output of the selector 25 and the data C.

As a result, the selector 27 outputs the maximum MAX among the data A-C.

(2) The operation is described below that the smallest one is selected among the data A-C.

The comparator 24 compares the data A with the data B.

On the basis of the comparison result of the comparator 24, the selector 28 selects the smaller one from the data A and the data B.

The comparator 29 compares the output of the selector 28 with the data C.

On the basis of the comparison result of the comparator 29, the selector 30 selects the smaller one from the output of the selector 28 and the data C.

As a result, the selector 30 outputs the minimum MIN among the data A-C.

The subtractor 31 calculates the difference between the maximum MAX and the minimum MIN, and thereby obtains the amplitude amount in the predetermined pixel vicinity area.

The above-mentioned description has been made for the case of the amplitude amount in an area in the horizontal direction. However, the situation is similar also to the amplitude amount in an area in the vertical direction.

As described above, the small-amplitude area detecting means 9 detects an area where the image varies gradually, and then the motion pixel counting means 12 expands the predetermined pixel vicinity area when the amplitude amount is smaller.

This reduces the chance of a miss in the motion detection in the motion signal generating means 5 even in an area where the image varies gradually (that is, a small-amplitude area), and hence permits accurate discrimination between the motion image portion and the stationary image portion.

### [Embodiment 4]

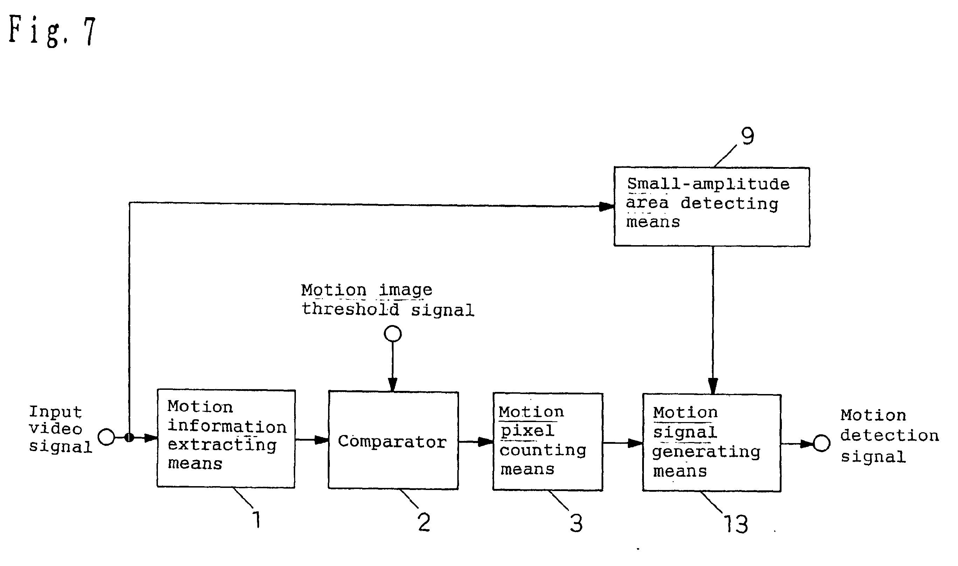

The configuration of a motion detecting apparatus according to the present embodiment is described below with reference mainly to Figure 7 showing a block diagram of a motion detecting apparatus according to Embodiment 4 of the invention.

The configuration of the motion detecting apparatus according to the present embodiment is similar to that of the above-mentioned motion detecting apparatus according to Embodiments 1-3.

Nevertheless, the configuration of the motion detecting apparatus according to the present embodiment is different from that of the above-mentioned motion detecting apparatus according to Embodiments 1-3 in the point that a detection signal from the small-amplitude area detecting means 9 is provided to a motion signal generating means 13.

Here, the amplitude amount detecting means according to the invention corresponds to means including the small-amplitude area detecting means 9. The change amount detecting means according to the invention corresponds to means including the motion information extracting means 1. The motion pixel determining means according to the invention corresponds to means including the comparing means 2. The motion signal generating means according to the invention corresponds to means including the motion pixel counting means 3 and the motion signal generating means 13.

The operation of the motion detecting apparatus according to the present embodiment is described below.

On the basis of the detection signal from the small-amplitude area detecting means 9, the motion signal generating means 13 performs the control such that a smaller amplitude amount causes the motion detection signal to be detected at a higher gain.

This control is implemented, for example, by changing a determination table provided in the motion signal generating means 13 into one having a higher sensitivity to the motion and thereby increasing the gain for the motion signal.

As described above, the small-amplitude area detecting means 9 detects an area where the image varies gradually. Then, on the basis of the detection signal, the determination table provided in the motion signal generating means 13 is changed.

This reduces the chance of a miss in the motion detection in the motion signal generating means even in an area where the image varies gradually (that is, a small-amplitude area), and hence permits accurate discrimination between the motion image portion and the stationary image portion.

### [Embodiment 5]

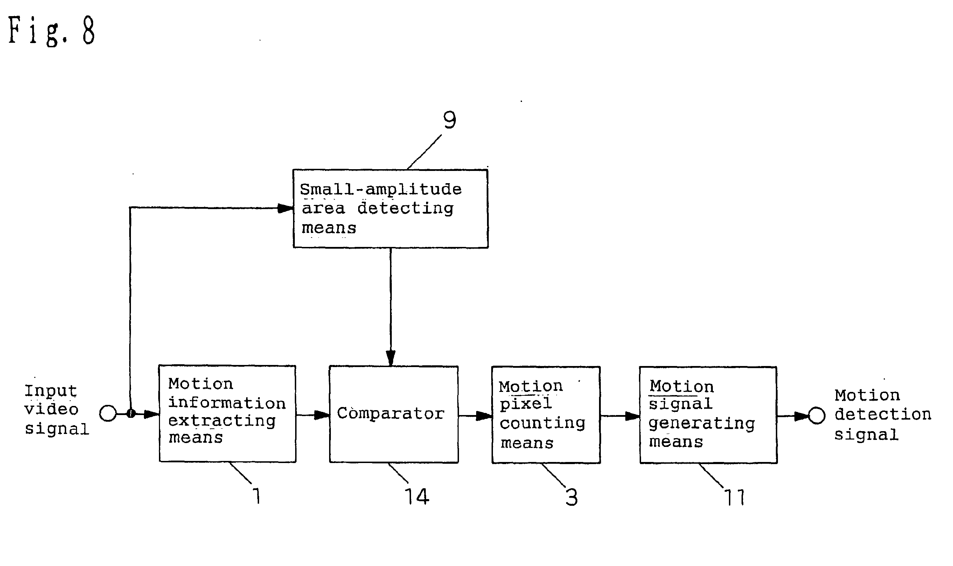

The configuration of a motion detecting apparatus according to the present embodiment is described below with reference mainly to Figure 8 showing a block diagram of a motion detecting apparatus according to Embodiment 5 of the invention.

The configuration of the motion detecting apparatus according to the present embodiment is similar to that of the above-mentioned motion detecting apparatus according to Embodiments 1-4.

Nevertheless, the configuration of the motion detecting apparatus according to the present embodiment is different from that of the above-mentioned motion detecting apparatus according to Embodiments 1-4 in the point that a detection signal from the small-amplitude area detecting means 9 is provided to a comparing means 14.

Here, the amplitude amount detecting means according to the invention corresponds to means including the small-amplitude area detecting means 9. The change amount detecting means according to the invention corresponds to means including the motion information extracting means 1. The motion pixel determining means according to the invention corresponds to means including the comparing means 14. The motion signal generating means according to the invention corresponds to means including the motion pixel counting means 3 and the motion signal generating means 11.

The operation of the motion detecting apparatus according to the present embodiment is described below.

On the basis of the detection signal from the small-amplitude area detecting means 9, the comparing means 14 performs the control such that a smaller amplitude amount causes the threshold signal provided to the comparing means 14 to become smaller.

As such, the small-amplitude area detecting means 9 detects an area where the image varies gradually. Then, on the basis of the detection signal, the threshold signal provided to the comparing means 14 is controlled.

By virtue of this, the threshold signal becomes smaller in an area where the image varies gradually (that is, a small-amplitude area), so that the motion detection sensitivity in the comparing means 14 increases. This reduces the chance of a miss in the motion detection, and hence permits accurate discrimination between the motion image portion and the stationary image portion.

It is needless to say that the above-mentioned Embodiments 1-5 may be combined arbitrarily.

### [Embodiment 6]

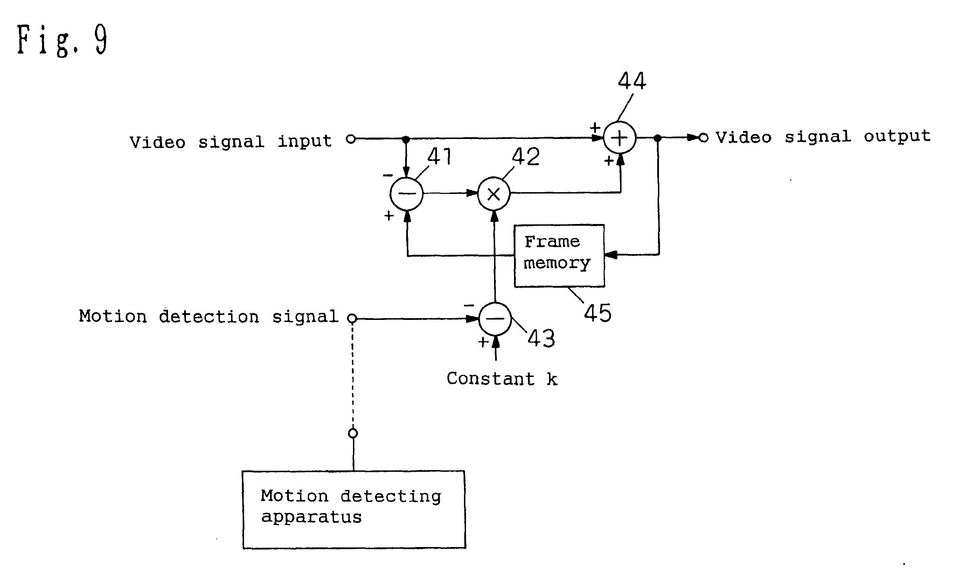

The configuration of a noise reducing apparatus according to the present embodiment is described below with reference mainly to Figure 9 showing a block diagram of a noise reducing apparatus according to Embodiment 6 of the invention.

Numeral 41 indicates a first subtractor of calculating the difference between the video signal delayed by one frame through a frame memory 45 and the input video signal.

Numeral 43 indicates a second subtractor of subtracting a motion detection signal obtainedby the motion detecting apparatus according to the above-mentioned embodiments from a constant k (which is larger than the motion detection signal).

Numeral 42 indicates a multiplier of multiplying the output signal of the first subtractor 41 and the output signal of the second subtractor 43 with each other.

Numeral 44 indicates an adder of adding the output signal of the multiplier 42 to the input video signal.

Numeral 45 indicates a frame memory of delaying the output signal of the adder 44 by one frame.

Here, the image processing apparatus according to the invention corresponds to means including the adder 44, while the image processing system according to the invention corresponds to the noise reducing apparatus according to the present embodiment.

The operation of the noise reducing apparatus according to the present embodiment is described below.

The frame memory 45 delays the output signal of the adder 44 by one frame.

The first subtractor 41 subtracts the video signal provided through the input terminal, from the signal delayed by one frame through the frame memory 45, and thereby calculates a frame difference signal.

The second subtractor 43 subtracts the motion detection signal from the constant k.

The multiplier 42 multiplies the output signal of the first subtractor 41 and the output signal of the second subtractor 43 with each other.

The adder 44 adds the output signal of the multiplier 42 to the input video signal.

Here, the frame difference value is smaller for an ordinary video signal having high inter-frame correlation, while the frame difference value is greater for a noise signal having low inter-frame correlation.

In the motion image portion, the motion detection signal is greater. This causes a smaller output signal of the second subtractor 43 and hence a smaller output signal of the multiplier 42. Accordingly, in the motion image portion, the signal (the output signal of the multiplier 42) added to the input video signal by the adder 44 is smaller. Thus, the output signal of the adder 44 almost equals the input video signal, and hence intense image blur does not occur owing to the motion.

On the contrary, in the stationary image portion, the motion detection signal is smaller. This causes a greater output signal of the second subtractor 43 and hence a greater output signal of the multiplier 42. Accordingly, in the stationary image portion, the signal added to the input video signal by the adder 44 is greater. This cancels out the influence of the noise detected as the frame difference signal by the first subtractor 41. Obviously, a greater output signal of the second subtractor 43 has a greater noise reduction effect.

As such, with suppressing the occurrence of motion blur in the motion image portion, a greater noise reduction effect is obtained in the stationary image portion.

More specifically, according to the present embodiment, suppressed are the occurrence of a tailing phenomenon strongly appearing in a motion image portion of human skin and the like and the degradation of a noise reduction effect in the stationary image portion, which appear in case of a poor accuracy in the motion detection.

That is, when the motion image portion is accurately detected using the above-mentioned motion detecting apparatus according to Embodiments 1-5, the noise reduction effect in the stationary image portion and the motion blur prevention in the motion image portion are achieved simultaneously.

The image processing system according to the invention has been described as a noise reducing apparatus in the present embodiment. However, the system is not limited to this, and may be a format converting apparatus and the like.

As such, Embodiments 1-6 have been described in detail.

As a consequence, even in a small-amplitude area where the image varies gradually, motion and noise are discriminated accurately, so that an accurate motion detection signal without a miss in the motion detection is obtained. When used in a noise reducing apparatus and the like, the invention has a greater noise reduction effect without motion blur.

In addition, a motion image region and a stationary image region are switched smoothly in the boundary portion thereof. This results in a notable effect that the display becomes more natural.

The program according to the invention is a program which causes a computer to execute the operation of all or part of the steps (or processes, operations, effects, and the like) in the above-mentioned motion detecting method of the invention, and which works in cooperation with the computer.

The recording medium according to the invention is a recording medium carrying a program of causing a computer to execute all or part of the operation of all or part of the steps (or processes, operations, effects, and the like) in the above-mentioned motion detecting method of the invention, wherein: the medium is read out by the computer; and the read-out program works in cooperation with the computer.

The above-mentioned "part of the steps (or processes, operations, effects, and the like) " according the invention indicates a step or steps among a plurality of these steps.

The above-mentioned "operation of the step (or process, operation, effect, and the like) " according the invention indicates all or part of the operation of the step.

A mode of use of a program according to the invention may be that the program is recorded in a computer-readable recording medium and works in cooperation with a computer.

A mode of use of a program according to the invention may be that the program is transmitted through a transmitting medium, read out by a computer, and works in cooperation with the computer.

The scope of recordingmedia according to the invention includes a ROM and the like, while the scope of transmitting media according to the invention includes a transmitting medium such as the Internet, as well as light, radio waves, acoustic waves, and the like.

The computer according to the invention is not limited to genuine hardware such as a CPU, and may be firmware, an OS, and a peripheral device.

The configuration according to the invention may be implemented by software or hardware as described above.

### INDUSTRIAL APPLICABILITY

The invention has an advantage that, for example, even in an area where the image varies gradually, the stationary image region and the motion image region are detected more accurately.

## Claims

1. A motion detecting apparatus comprising:
amplitude amount detecting means of detecting the amplitude amount of an image corresponding to a predetermined pixel vicinity area of said image containing a predetermined pixel;
change amount detecting means of detecting the time-dependent change amount of said image;
motion pixel determining means of determining whether at least said predetermined pixel is a motion pixel or not on the basis of said detected change amount; and
motion signal generating means of generating a motion signal corresponding to said predetermined pixel, on the basis of the result of said determination; wherein
on the basis of said detected amplitude amount, (1) the time-dependent change amount of said image is detected, and/or (2) whether at least said predetermined pixel is a motion pixel or not is determined, and/or (3) the motion signal corresponding to said predetermined pixel is generated.

2. A motion detecting apparatus according to Claim 1, wherein when said detected amplitude amount is smaller, at least the gain for the change amount corresponding to said predetermined pixel is corrected into a greater value, so that the time-dependent change amount of said image is detected.

3. A motion detecting apparatus according to Claim 1, wherein when said detected amplitude amount is smaller, the threshold level used in the determination of whether at least said predetermined pixel is a motion pixel or not is corrected into a smaller value, so that whether at least said predetermined pixel is a motion pixel or not is determined.

4. A motion detecting apparatus according to Claim 1, wherein when said detected amplitude amount is smaller, the area of pixels where the result of said determination is used for the generation of the motion signal corresponding to said predetermined pixel is corrected greater, so that the motion signal corresponding to said predetermined pixel is generated.

5. A motion detecting apparatus according to Claim 1, wherein when said detected amplitude amount is smaller, the gain for the motion signal corresponding to said predetermined picture is corrected into a greater value, so that the motion signal corresponding to said predetermined pixel is generated.

6. An image processing system comprising:
a motion detecting apparatus according to Claim 1; and
an image processing apparatus of performing predetermined image processing on the basis of said generated motion signal.

7. A motion detecting method comprising:
an amplitude amount detecting step of detecting the amplitude amount of an image corresponding to a predetermined pixel vicinity area of said image containing a predetermined pixel;
a change amount detecting step of detecting the time-dependent change amount of said image;
a motion pixel determining step of determining whether at least said predetermined pixel is a motion pixel or not on the basis of said detected change amount; and
a motion signal generating step of generating a motion signal corresponding to said predetermined pixel, on the basis of the result of said determination; wherein
on the basis of said detected amplitude amount, (1) the time-dependent change amount of said image is detected, and/or (2) whether at least said predetermined pixel is a motion pixel or not is determined, and/or (3) the motion signal corresponding to said predetermined pixel is generated.

8. A program causing a computer to execute: the amplitude amount detecting step of detecting the amplitude amount of an image corresponding to a predetermined pixel vicinity area of said image containing a predetermined pixel; the change amount detecting step of detecting the time-dependent change amount of said image ; the motion pixel determining step of determining whether at least said predetermined pixel is a motion pixel or not on the basis of said detected change amount; and the motion signal generating step of generating a motion signal corresponding to said predetermined pixel, on the basis of the result of said determination; in the motion detecting method according to Claim 7.

9. A computer-processable recordingmedium carrying the program according to Claim 8.
